# EUROPEAN PATENT SPECIFICATION

(11) **EP 2 439 224 B1**
(45) Date of publication and mention of the grant of the patent: **25.06.2014**
(21) Application number: 10013471.7
(22) Date of filing: 08.10.2010
(51) Int. Cl.: C08G 63/664, C08G 63/672, C09J 167/08, C08G 18/42, C08G 18/68, C09J 175/04

(54) **Polyester-based adhesive containing a heterobicycle**
Polyesterbasierte Haftmittel mit einem Heterobizyklus
Adhésif à base de polyester contenant un hétérobicycle

(43) Date of publication of application: 11.04.2012
(73) Proprietor: NITTO EUROPE N.V, 3600 Genk (BE); Nitto Denko Corporation, Osaka 567-8680 (JP)
(72) Inventor: Vendamme, Richard, 3500 Hasselt (BE); Eevers, Walter, 3520 Zonhoven (BE)
(74) Representative: Grünecker, Kinkeldey, Stockmair & Schwanhäusser

(56) References cited:
- WO-A1-03/082944
- WO-A1-2006/102280

## Description

The present invention is directed to a polyester-based pressure-sensitive adhesive containing a heterobicycle.

Adhesives are compounds in a liquid or semi-liquid state that can adhere or bond items together. Adhesives are usually derived from fossil fuel, i.e. non-renewable resources. Because of rising oil prices and environmental concerns, there is an increased demand for bio-based materials. Bio-based materials prepared by the polycondensation of plant-derived dicarboxylic acids and plant-derived diols have been employed in adhesive products because of their good technical properties and their sustainability as a renewable resource. However, in view of practical applications, the visco-elastic properties of these polymers need to be optimized by a cross-linking treatment. This cross-linking step is generally performed by treating the polycondensate with an agent having at least 2 functional groups capable of reacting with the polycondensate.

WO-2004/056901-A1 discloses an adhesive comprising polyisocyanate and a polyol comprising at least one dimer fatty acid and/or dimer fatty diol and the use as wood adhesive.

JP-2008-195819 discloses a polyester-based self-adhesive composition containing a chain-extended polyester that is produced by chain extending the polyester consisting of a dicarboxylic acid and diol by an isocyanate compound. The polyester-based self-adhesive can be prepared with a dicarboxylic acid and a diol, which both originate from plants. Among them, the plant-derived dicarboxylic acid may be a dimer acid and the plant-derived diol may be a dimer diol.

Isosorbide is a bio-based heterobicycle and known as a rigidifying agent in polymer compositions. WO 2006/102280 discloses a thermoplastic toner composition comprising a mixture of an amorphous thermoplastic polymer selected from the group consisting of a polyester, a polyester ether and a polyurethane, wherein the polymer has a Tg between 50°C and 80°C. The polyester may be based upon dimer diols, isosorbide-derived diols and dimer acids.

WO-A-03/082944 discloses a polyurethane obtainable by reacting a polyisocyanate, a polyester formed from a dimer fatty acid and/or dimer fatty diol, and a chain extender, wherein the polyester is additionally formed from a 1,4;3,6 dianhydrohexitol and/or the chain extender comprises a 1,4;3,6 dianhydrohexitol. The polyurethane represents as a hotmelt adhesive.

The problem underlying the present invention is to provide an adhesive composition having good adhesion and cohesion, as well as high biodegradability.

Said problem is solved by a pressure-sensitive adhesive obtainable by reacting
a) a polycondensate of
   a1) a heterobicycle containing from 4 to 8 carbon atoms and from 1 to 3 oxygen atoms, wherein the heterobicycle is substituted by 2 to 4 hydroxyl groups,
   a2) a dimer of a fatty acid
   and
b) a cross-linking agent having at least 2 functional groups per molecule.

In a preferred embodiment in combination with any of the above or below embodiments, the adhesive is bio-based. The term "bio-based" as used herein requires at least 70% of "renewable" carbon according to ASTM 6866-08.

A heterobicycle containing from 4 to 8 carbon atoms is a heterobicycle containing 4, 5, 6, 7 or 8 carbon atoms.

A heterobicycle containing from 1 to 3 oxygen atoms is a heterobicycle containing 1, 2 or 3 oxygen atoms.

A heterobicycle which is substituted by 2 to 4 hydroxyl groups is a heterobicycle which is substituted by 2, 3 or 4 hydroxyl groups.

In a preferred embodiment in combination with any of the above or below embodiments, the heterobicycle contains 5, 6 or 7 carbon atoms and 1, 2 or 3 oxygen atoms, wherein the heterobicycle is substituted by 2, 3 or 4 hydroxyl groups.

In a preferred embodiment in combination with any of the above or below embodiments, the heterobicycle contains 5, 6 or 7 carbon atoms and 2 or 3 oxygen atoms, wherein the heterobicycle is substituted by 2, 3 or 4 hydroxyl groups.

In a preferred embodiment in combination with any of the above or below embodiments, the heterobicycle contains 5, 6 or 7 carbon atoms and 2 or 3 oxygen atoms, wherein the heterobicycle is substituted by 2 or 3 hydroxyl groups.

In a preferred embodiment in combination with any of the above or below embodiments, the heterobicycle contains 6 carbon atoms and 2 oxygen atoms, wherein the heterobicycle is substituted by 2 hydroxyl groups.

In a preferred embodiment in combination with any of the above or below embodiments, the heterobicycle is a 1,4:3,6 dianhydrohexitol, more preferably selected from the group consisting of isosorbide, isomannide and isoidide.

Dianhydrohexitols are commercially available. For instance, isosorbide can be obtained under the trade name "Polysorb P" from Roquette Frères S.A. (Lestrem, France). Isosorbide is also available from Cargill Deutschland.

In a preferred embodiment in combination with any of the above or below embodiments, component a1) is present in a concentration of 1 wt% to 50 wt%, more preferably 5 wt% to 35 wt%, in particular 10 wt% to 25 wt%, relative to the polycondensate a).

In preferred embodiment in combination with any of the above or below embodiments, the fatty acid has from 14 to 22 carbon atoms, i.e. 14, 15, 16, 17, 18, 19, 20, 21 or 22 carbon atoms.

The term "dimer of a fatty acid" as used herein refers to the dimerisation product of mono- or polyunsaturated fatty acids and/or esters thereof.

In another preferred embodiment in combination with any of the above or below embodiments, the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty acid are commercially available. For example, dimers of oleic acid or linoleic acid are available from Croda (Gouda, The Netherlands) under the trade name PRIPOL 1009, or Cognis (Düsseldorf, Germany) under the trade names EMPOL 1008 or EMPOL 1016.

PRIPOL 1009 and EMPOL 1008 are high purity, fully hydrogenated, and distilled aliphatic dimer acids. These products appear as colorless to light colored, clear viscous liquids. Their properties can be summarized as follows:

| | |
|---|---|
| Color (Gardner / DIN ISO 4630) | < 1 |
| | |
| Acid Value (ISO 660) | 195 mg KOH/g |
| | |
| Monobasic acids (HPLC %) | max 2 % |
| | |
| Dibasic Acids (HPLC %) | min 95 % |
| | |
| Polybasic Acids (HPLC %) | 1 to 5 % |
| | |
| Viscosity at 25°C, poise (ASTM 2196) | 40 - 70 |

In a preferred embodiment in combination with any of the above or below embodiments, component a2) is present in a concentration of 50 wt% to 99 wt%, more preferably 65 wt% to 95 wt%, in particular 75 wt% to 90 wt%, relative to the polycondensate a).

In a preferred embodiment in combination with any of the above or below embodiments, component a) is present in a concentration of 45 wt% to 95 wt%, more preferably 50 wt% to 90 wt%, in particular 55 wt% to 80 wt%, relative to the adhesive.

In a preferred embodiment in combination with any of the above or below embodiments, the molar ratio of component a1) to component a2) is from 2:1 to 1:2, more preferably from 1.3:1 to 1:1.3, in particular about 1:1. An excess of component a1) or component a2) yields a polycondensate having a lower molecular weight having hydroxyl or carboxylic acid functional groups, respectively.

In a preferred embodiment in combination with any of the above or below embodiments, the cross-linking agent has at least 2 functional groups selected from the group consisting of an isocyanate, an epoxide, and an anhydride, and any combination thereof.

In a preferred embodiment in combination with any of the above or below embodiments, b) is a cross-linking agent having at least 2 isocyanate functional groups.

In another preferred embodiment in combination with any of the above or below embodiments, b) is a cross-linking agent having a structure R-(N=C=O)n, wherein R is an aliphatic, alicyclic or aromatic residue, and n is an integer ≥ 2. In a preferred embodiment in combination with any of the above or below embodiments, R is an aliphatic, alicyclic or aromatic residue containing from 10 to 40 carbon atoms. In a preferred embodiment in combination with any of the above or below embodiments, n is an integer of 2, 3, 4, 5 or 6, more preferably of 2, 3 or 4, in particular 3.

In a preferred embodiment in combination with any of the above or below embodiments, b) is selected from the group consisting of trimerized isocyanates, more preferably trimerized aliphatic isocyanates, and any combination thereof.

In another preferred embodiment in combination with any of the above or below embodiments, b) is selected from the group consisting of trimerized derivatives of MDI [4,4-methylene-di(phenyl isocyanate)], HDI [hexamethylene diisocyanate, 1,6-hexylene diisocyanate], IPDI [isophorone diisocyanate, 5-isocyanato-1-isocyanatomethyl-1,3,3-trimethylcyclohexane], and any combination thereof.

In another preferred embodiment in combination with any of the above or below embodiments, b) is selected from the group consisting of Desmodur VL 50 (MDI-based polyisocyanates, Bayer AG), Basonat F200WD (aliphatic polyisocyanate, BASF AG), Desmodur® grades N3600 and XP2410 (each from BAYER AG: aliphatic polyisocyanates, low-viscosity HDI trimers), the trimer of isophorone diisocyanate (Vestagon B 1530), hexamethylene 1,6-diisocyanate, tolulene diisocyanate, m-phenylene diisocyanate, p-phenylene diisocyanate, xylylene diisocyanate, 4,4'-diphenyl methane diisocyanate, 2,4'-diphenyl methane diisocyanate, 2,2'-diphenyl methane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate, 1,5-naphthalene diisocyanate, modified compounds thereof such as uretonimine-modified compounds thereof, and any combination thereof.

In a preferred embodiment in combination with any of the above or below embodiments, b) is a cross-linking agent having at least 2 epoxy functional groups.

In another preferred embodiment in combination with any of the above or below embodiments, b) is selected from the group consisting of a dimeric, oligomeric and polymeric epoxy materials containing at least 2 epoxy functional groups, and any combination thereof.

In another preferred embodiment in combination with any of the above or below embodiments, b) is selected from the group consisting of glycidyl esters.

In another preferred embodiment in combination with any of the above or below embodiments, b) is the reaction product of epichlorohydrin and p-amino phenol.

In another preferred embodiment in combination with any of the above or below embodiments, b) is the reaction product of bisphenol A and epichlorohydrin, more preferably selected from the group consisting of Ciba Geigy Araldite™ 6010, Dow Chemical DER™ 331, and Shell Chemical Epon™ 825, 828, 826, 830, 834, 836, 1001, 1004, 1007.

In another preferred embodiment in combination with any of the above or below embodiments, b) is the reaction product of phenol and formaldehyde (novolac resin) and epichlorohydrin, more preferably wherein the novolac resin is selected from the group consisting of DEN™ 431 and 438 from Dow Chemical, CY-281™ from Ciba Geigy (polyepoxidized phenol formaldehyde novolac prepolymer), ECN™ 1285, 1280 and 1299 from Ciba Geigy (polyepoxidized cresol formaldehyde novolac prepolymer).

In another preferred embodiment in combination with any of the above or below embodiments, b) is a polyglycidyl ether of polyhydric alcohol, more preferably wherein the polyhydric alcohol is butane-1,4-diol (available under the trade-name Araldite™ RD-2 from Ciba Geigy) or glycerine (available under the trade-name Epon™ 812 from Shell Chemical).

In another preferred embodiment in combination with any of the above or below embodiments, b) is a flexible epoxy resin, more preferably selected from polyglycol diepoxies (available under the trade-name DER™ 732 and 736, from Dow Chemical Company), and a diglycidyl ester of linoleic dimer acid (available under the trade-name Epon™ 871 and 872, from Shell Chemical Company).

In another preferred embodiment in combination with any of the above or below embodiments, b) is an epoxy resin having more than two functional groups, more preferably selected from the group consisting of triglycidyl isocyanurate (TGIC), N,N,N',N'- tetrakis(2-hydroxyethyl)adipamide (e.g. Primid XL 552), tetraglycidyl meta-xylenediamine (such as Erisys GA-240 from Emerald Performance Materials), a triglycidylether of p-aminophenol (e.g. Araldite™ 0500/0510 from Ciba-Geigy Corporation), N,N,N',N',-tetraglycidyl-a,a'-bis(4-aminophenyl)-p-diisopropyl-benzene, diglycidyl ether of bisphenol-9-fluorene, and N,N,N',N'-tetraglycidyl-4,4'-methylenebis-benzenamine (e.g. Araldite™ 720 from Ciba Corporation).

In another preferred embodiment in combination with any of the above or below embodiments, b) is an epoxidized triglyceride, more preferably an epoxidized triglyceride of a natural oil, in particular wherein the natural oil is selected from the group consisting of linseed oil, soybean oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and any combination thereof. In another preferred embodiment in combination with any of the above or below embodiments the number of epoxy groups in the epoxidized fatty acid ester is 2, 3, 4, 5 or 6, more preferably 3, 4 or 5.

Triglycerides are the main component of natural oils and are composed of three fatty acid groups connected by a glycerol centre. Epoxidized triglycerides can be found as such in nature, for instance in Vernonia plants, or can be conveniently synthesized from more common unsaturated oils by using a standard epoxidation process.

Epoxidized triglycerides are also commercially available. For example, epoxidized linseed oil (ELO) is available from Cognis (Düsseldorf, Germany) under the trade name DEHYSOL B316 SPEZIAL, or Arkema (King of Prussia, Pennsylvania) under the trade name VIKOFLEX 7190. Epoxidized soybean oil (ESBO) is commercially available from Cognis (Düsseldorf, Germany) under the trade name DEHYSOL D82, or from Arkema (King of Prussia, Pennsylvania) under the trade name VIKOFLEX 7170.

In a preferred embodiment in combination with any of the above or below embodiments, b) is a cross-linking agent having at least 2 anhydride functional groups.

In another preferred embodiment in combination with any of the above or below embodiments, b) is selected from the group consisting of a dimeric, oligomeric and polymeric anhydride materials containing at least 2 anhydride functional groups, and any combination thereof.

In another preferred embodiment in combination with any of the above or below embodiments, b) is selected from the group consisting of pyromellitic dianhydride (PMDA), 3,3',4,4'-oxydiphthalic dianhydride (ODPA), 3,3',4,4'-benzophenone tetracarboxylic dianhydride (BTDA), 3,3',4,4'-biphenyltetracarboxylic dianhydride, 1,2,3,4-cyclobutanetetracarboxylic dianhydride, 4,4'-diphthalic (hexafluoroisopropylidene) anhydride (6FDA), benzoquinonetetracarboxylic dianhydride, and ethylenetetracarboxylic dianhydride.

In another preferred embodiment in combination with any of the above or below embodiments, component b) is present in a concentration of 5 wt% to 55 wt%, more preferably 10 wt% to 50 wt%, in particular 15 wt% to 40 wt%, relative to the adhesive.

In a preferred embodiment in combination with any of the above or below embodiments, a1) further contains a diol monomer.

The term "diol monomer" as used herein refers to an aliphatic diol. In a preferred embodiment in combination with any of the above or below embodiments, the diol monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol monomer is derived from renewable sources, in particular, selected from the group consisting of 1,3-propanediol or 1,4-butanediol.

In a preferred embodiment in combination with any of the above or below embodiments, a1) contains 0.1 mol% to 50 mol%, preferably 5 mol% to 15 mol% of the diol monomer, relative to the total amount of hydroxy-functional monomers.

In a preferred embodiment in combination with any of the above or below embodiments, a1) further contains a dimer of a fatty alcohol monomer.

In a preferred embodiment in combination with any of the above or below embodiments, the fatty alcohol has from 14 to 22 carbon atoms, i.e. 14, 15, 16, 17, 18, 19, 20, 21 or 22 carbon atoms. The term "dimer of a fatty alcohol" as used herein refers to the dimerisation product of mono- or polyunsaturated fatty alcohols.

In another preferred embodiment in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from Croda (trade name PRIPOL 2033) or Cognis (SOVERMOL 908). Both PRIPOL 2033 and SOVERMOL 908 are highly pure, fully hydrogenated, and distilled aliphatic dimer alcohols. These products appear as colorless, clear viscous liquids. Their properties can be summarized as follows:

| | |
|---|---|
| Color (Gardner / DIN ISO 4630) | < 1 |
| | |
| OH Value (DIN 53240) | 200 - 212 mg KOH/g |
| | |
| Acid Value (ISO 660) | <= 0.2 mg KOH/g |
| Water Content (ISO 2464) | <= 0.2 % |
| | |
| Viscosity at 25°C (ISO 2555) | 1800 - 2800 mPa/s |
| | |
| Functionality | 2 |

In a preferred embodiment in combination with any of the above or below embodiments, a1) contains 0.1 mol% to 50 mol%, preferably 5 mol% to 15 mol% of the dimer of a fatty alcohol, relative to the total amount of hydroxyl-functional monomers.

In a preferred embodiment in combination with any of the above or below embodiments, a1) further contains glycerol. In a preferred embodiment in combination with any of the above or below embodiments a1) contains 0.1 mol% to 15 mol%, preferably 5 mol% to 10 mol% of glycerol. Glycerol is one of the main components of natural oils and may serve as a branching agent in the present invention.

The use of glycerol allows the enhancement of the functionality of the polymer and the facilitation of the subsequent cross-linking process.

In a preferred embodiment in combination with any of the above or below embodiments, a1) further contains a diamine monomer.

The term "diamine monomer" as used herein refers to an aliphatic diamine. In a preferred embodiment in combination with any of the above or below embodiments, the diamine monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diamine monomer is selected from the group consisting of 1,4-diaminobutane or 1,5-diaminopentane.

In a preferred embodiment in combination with any of the above or below embodiments, a1) contains 0.1 mol% to 50 mol%, preferably 5 mol% to 15 mol% of the diamine monomer relative to the total amount of hydroxyl-functional monomers.

In a preferred embodiment in combination with any of the above or below embodiments, a1) further contains a dimer of a fatty amine monomer.

In a preferred embodiment in combination with any of the above or below embodiments, the fatty amine has from 14 to 22 carbon atoms, i.e. 14, 15, 16, 17, 18, 19, 20, 21 or 22 carbon atoms.

The term "dimer of a fatty amine" as used herein refers to the dimerisation product of mono- or polyunsaturated fatty amines.

In another preferred embodiment in combination with any of the above or below embodiments, the dimer of a fatty amine is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty amine are commercially available for example from Croda (trade name PRIPOL 1074).

In a preferred embodiment in combination with any of the above or below embodiments, a1) contains 0.1 mol% to 50 mol%, preferably 5 mol% to 15 mol% of the dimer of a fatty amine, relative to the total amount of hydroxyl-functional monomers.

In a preferred embodiment in combination with any of the above or below embodiments, a2) further contains a diacid monomer.

The term "diacid monomer" as used herein refers to a saturated dicarboxylic acid. In a preferred embodiment in combination with any of the above or below embodiments, the diacid monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms.

In another preferred embodiment in combination with any of the above or below embodiments, the diacid monomer is derived from renewable sources, in particular selected from the group consisting of succinic acid, sebacic acid, and azelaic acid. For instance, succinic acid is produced by fermentation of sugars, and azelaic acid is obtained industrially by ozonolysis of oleic acid. Renewable azelaic acid is commercially available from Cognis (Düsseldorf, Germany) under the trade names Emerox 1110 or Emerox 1144.

In a preferred embodiment in combination with any of the above or below embodiments, a2) contains 0.1 mol% to 50 mol%, more preferably 10 mol% to 30 mol% of a diacid monomer.

In a preferred embodiment in combination with any of the above or below embodiments, a2) further contains a trimer of a fatty acid.

The use of a trimer of a fatty acid allows the enhancement of the functionality of the polymer and the facilitation of the subsequent cross-linking process.

The term "trimer of a fatty acid" as used herein refers to the trimerisation product of mono- or polyunsaturated fatty acids and/or esters thereof.

Trimers of a fatty acid are obtainable as by-products during the dimerisation of fatty acids, for example, oleic acid or linoleic acid, and can be isolated by distillation. Such trimer acids are commercially available, for example, from Croda under the trade name PRIPOL 1006 (mixture: 95 wt% dimer acid / 5 wt% trimer acid), PRIPOL 1025 (mixture: 80 wt% dimer acid / 20 wt% trimer acid) or PRIPOL 1040 (mixture: 25 wt% dimer acid / 75 wt% trimer acid), and from Cognis (EMPOL 1045 or EMPOL 1043).

PRIPOL 1040 and EMPOL 1045 are fully hydrogenated trimer acids with a polybasic acid content of typically more than 70%, and are useful in applications where branching is desired. Their properties can be summarized as follows:

| | |
|---|---|
| Acid Value (ISO 660) | 180 - 200 mg KOH/g |
| | |
| Monobasic acids (HPLC %) | max 5% |
| | |
| Dibasic Acids (HPLC %) | 0 - 40% |
| | |
| Polybasic Acids (HPLC %) | 60 - 90% |
| | |
| Viscosity at 25°C, poise (ASTM 2196) | 200 - 500 |

In a preferred embodiment in combination with any of the above or below embodiments, a2) contains 1 mol% to 20 mol%, preferably 5 mol% to 15 mol% of the trimer of a fatty acid.

In a preferred embodiment in combination with any of the above or below embodiments, the polycondensate has a weight average molecular weight (Mw) of from 2,000 g/mol to 80,000 g/mol, more preferably 5,000 g/mol to 30,000 g/mol, in particular 10,000 g/mol to 20,000 g/mol. As used herein, the average molecular weights of the polymers were determined by gel permeation chromatography (GPC) instrument (Waters Model Pump 515 and Waters 2414 refractive index detector) with styragel columns relative to polystyrene (PS) standards using tetrahydrofuran (THF) as eluent.

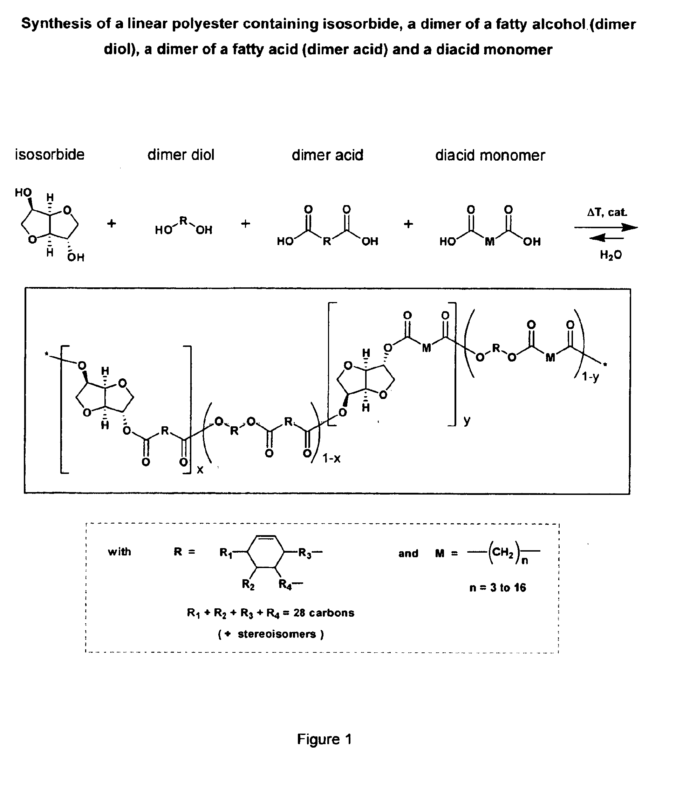

Figure 1 shows the synthesis of a linear polyester containing isosorbide, a dimer of a fatty alcohol (dimer diol), a dimer of a fatty acid (dimer acid) and a diacid monomer.

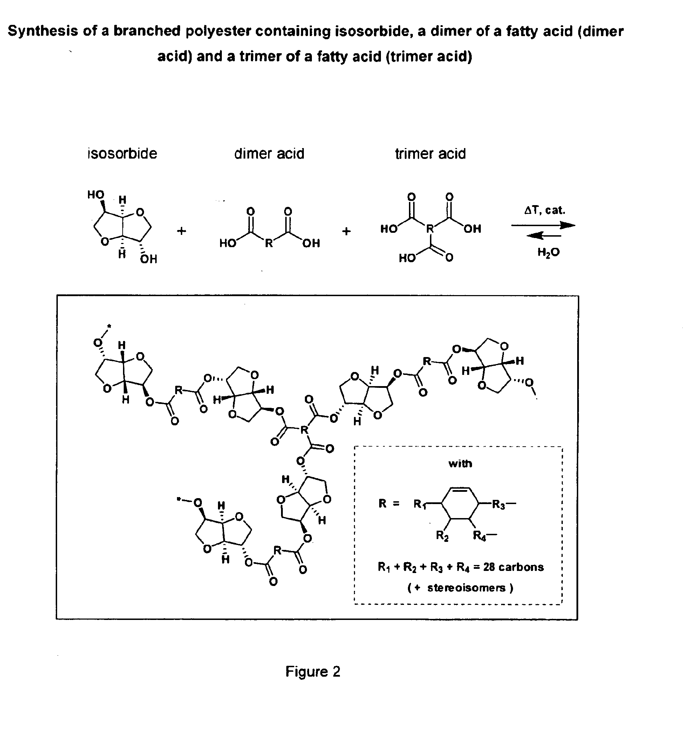

Figure 2 shows the synthesis of a branched polyester containing isosorbide, a dimer of a fatty acid (dimer acid) and a trimer of a fatty acid (trimer acid).

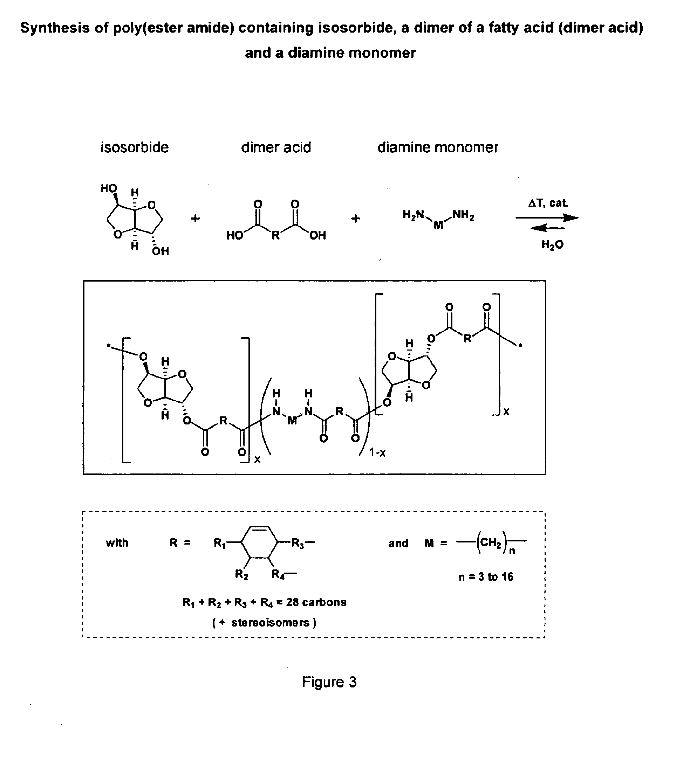

Figure 3 shows the synthesis of poly(ester amide) containing isosorbide, a dimer of a fatty acid (dimer acid) and a diamine monomer.

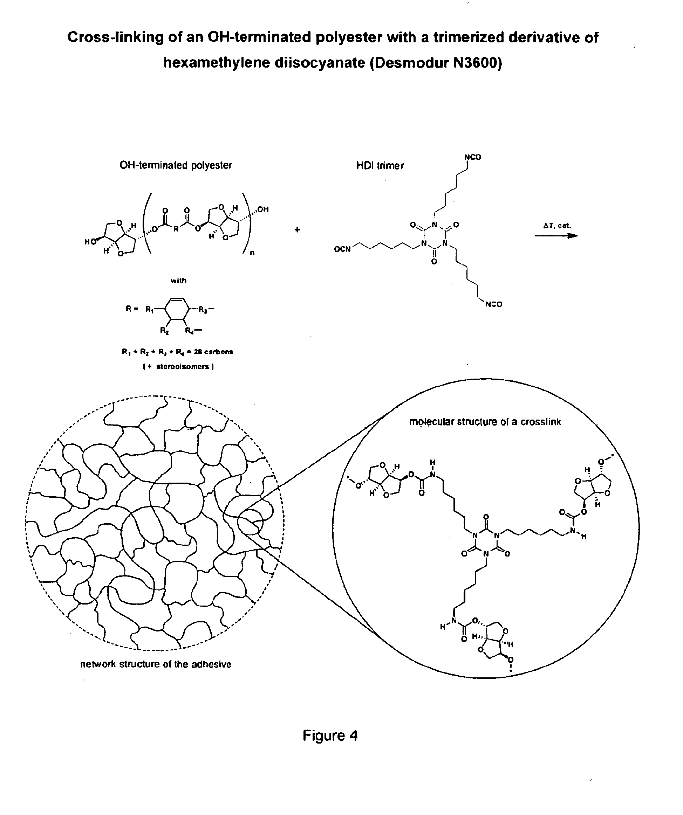

Figure 4 shows the cross-linking of an OH-terminated polyester with a trimerized derivative of hexamethylene diisocyanate (Desmodur N3600).

In a preferred embodiment in combination with any of the above or below embodiments, the adhesive comprises a tackifying resin, more preferably selected from the group consisting of abietic acid, an abietic acid ester, a terpene resin, a terpene/phenol resin and a hydrocarbon resin.

In a preferred embodiment in combination with any of the above or below embodiments, the adhesive comprises a filler, more preferably selected from the group consisting of a silicate, talcum, calcium carbonate, clay and carbon black.

In a preferred embodiment in combination with any of the above or below embodiments, the adhesive comprises a plasticizer, more preferably selected from the group consisting of a phthalate and a thixotropicizing agent. The thixotropicizing agent is preferably selected from the group consisting of bentone, pyrogenic silicas, urea derivatives, fibrillated or pulp chopped fibers. Preferably, the pulp chopped fibers are selected from the group consisting of kenaf, hemp, flax, jute, sisal, cotton and linen.

In a preferred embodiment in combination with any of the above or below embodiments, the adhesive comprises a pigment. In another preferred embodiment in combination with any of the above or below embodiments, the adhesive comprises a pigment paste.

In another embodiment, the invention is directed to a method for preparing the pressure-sensitive adhesive according to the invention, comprising reacting in a solvent
a) a polycondensate of
   a1) a heterobicycle containing from 4 to 8 carbon atoms and from 1 to 3 oxygen atoms, wherein the heterobicycle is substituted by 2 to 4 hydroxyl groups,
   a2) a dimer of a fatty acid
   and
b) a cross-linking agent having at least 2 functional groups per molecule.

In a preferred embodiment in combination with any of the above or below embodiments, the polycondensate is obtainable by reacting components a1) and a2) at a temperature of 160°C to 300°C, more preferably of 220°C to 260°C, in particular at about 250°C. This temperature range allows for the formation of ester bonds from carboxylic acids and diols, but avoids a thermal degradation and discoloration of the heterobicyclic compound.

In a preferred embodiment in combination with any of the above or below embodiments, the reaction of components a1) and a2) is performed in the absence of an organic solvent.

In a preferred embodiment in combination with any of the above or below embodiments, a vacuum is applied during the polycondensation reaction in order to promote the extraction of water and to speed up the reaction. The vacuum pressure is preferably in a range of 0.1 mbar to 25 mbar, more preferably 1 mbar to 5 mbar, in particular about 1.5 mbar.

In a preferred embodiment in combination with any of the above or below embodiments, the polycondensation reaction is conducted in the presence of a polymerisation catalyst. Catalysts that may be used for the polycondensation process are well-known in the art. In another preferred embodiment in combination with any of the above or below embodiments, the catalyst is selected from the group consisting of salts and oxides of Li, Ca, Mg, Mn, Zn, Pb, Sb, Sn, Ge, and Ti, and their glycol adducts, more preferably acetate salts and Ti alkoxides, even more preferably titanium(IV) n-butoxide, tin(II) octoate, butyl tin chloride dihydroxide, manganese acetate, zinc acetate, in particular titanium(IV) n-butoxide and tin(II)octoate are preferred esterification catalysts.

In a preferred embodiment in combination with any of the above or below embodiments, the catalyst is included initially with the reactants. In another preferred embodiment in combination with any of the above or below embodiments, the catalyst is added one or more times to the mixture as it is heated.

In a preferred embodiment in combination with any of the above or below embodiments, the polymerisation catalyst is used in a concentration of 0.001 to 2 wt%, more preferably 0.005 to 0.5 wt%, in particular about 0.01 wt%.

In a preferred embodiment in combination with any of the above or below embodiments, the reaction of components a1) and a2) is performed in the presence of a stabilizer. More preferably, the stabilizer is a phenolic stabilizer, in particular selected from the group consisting of Irganox 259, Irganox 1010, Irganox 1330, Irganox B900, Irganox HP2921 FF, and any combination thereof.

The same preferred reaction conditions are applicable for the polycondensation reaction if a1) further contains a diol monomer, a dimer of a fatty alcohol, glycerol, a diamine monomer, and/or a dimer of a fatty amine, and/or a2) further contains a diacid monomer and/or a trimer of a fatty acid.

In a preferred embodiment in combination with any of the above or below embodiments, the method for preparing the adhesive comprises reacting the polycondensate and the cross-linking agent in a solvent, wherein the solvent is an organic solvent. The solvent is preferably a hydrocarbon such toluene or xylene.

In a preferred embodiment in combination with any of the above or below embodiments, the method for preparing the adhesive comprises reacting the polycondensate and the cross-linking agent in a solvent, wherein the concentration of polycondensate and the cross-linking agent is 85 to 99 wt%.

In a preferred embodiment in combination with any of the above or below embodiments, a catalyst is used in the reaction between polycondensate and cross-linking agent. Suitable catalysts for this reaction are known in the art.

If the cross-linking agent contains isocyanate groups, a known catalyst for the preparation of polyurethane may be used. In a preferred embodiment in combination with any of the above or below embodiments, the catalyst for the reaction between the polycondensate (carboxy-terminated and/or hydroxy-terminated) and the isocyanate cross-linking agent is selected from the group consisting of divalent tin, tetravalent tin, and a tertiary amine.

In a preferred embodiment in combination with any of the above or below embodiments, the catalyst is divalent tin, more preferably selected from the group consisting of dicarboxylates of divalent tin. In particular, the catalyst is selected from the group consisting of tin(II) octoate, tin(II) phenolate, and the acetyl acetonates of divalent tin.

In a preferred embodiment in combination with any of the above or below embodiments, the catalyst is tetravalent tin, more preferably selected from the group consisting of dialkyl tin dicarboxylates and dialkoxylates. In particular, the tetravalent tin is selected from the group consisting of dibutyl tin dilaurate, dibutyl tin diacetate, dioctyl tin diacetate, dibutyl tin maleate, and the acetyl acetonates of tetravalent tin.

In a preferred embodiment in combination with any of the above or below embodiments, the catalyst is a tertiary amine. In particular, the amine is selected from the group consisting of the group consisting of 2-methylimidazole, trimethylamine, triethylamine, tetramethyl butane diamine, bis-(dimethylaminoethyl)-ether, 1,4-diazabicyclooctane (DABCO), 2,2'-dimorpholino-diethyl ether, dimethyl piperazine, and mixtures thereof.

In a preferred embodiment in combination with any of the above or below embodiments, the catalyst is an amidine. In particular, the amidine is selected from the group consisting of 1,8-diazabicyclo-(5.4.0)-undecane, 1,5-diazabicyclo[4.3.0]non-5-ene (DBN), 1,8-diazabicyclo[5.4.0]-undec-7-ene (DBU).

If the cross-linking agent contains epoxy groups, a known catalyst selected from the class of strong Lewis acids may be used. In a preferred embodiment in combination with any of the above or below embodiments, the catalyst for the reaction between a carboxy-terminated polycondensate and an epoxy cross-linking agent is selected from the group consisting of sodium carbonate and an organo metallic compound. The organo metallic compound is preferably selected from the group consisting of lithium neodecanoate, a zinc complex, tertiary amines, hexadecyltrimethylammonium bromine, and triphenyl phosphine oxide. A preferred zinc complex is commercially available from King Industries, Inc. (Norwalk, Connecticut) under the trade name NACURE XC-9206.

If the cross-linking agent contains anhydride groups, the following catalysts may be used. In a preferred embodiment in combination with any of the above or below embodiments, the catalyst for the reaction between a hydroxyl-terminated polycondensate and an anhydride cross-linking agent is selected from the group consisting of a tertiary amine, p-toluene sulfonic acid, dodecylbenzene sulfonic acid, methane sulfonic acid, amidines such as 1,8-diazabicyclo-[5.4.0]undec-7-ene (DBU), and guanidines such as 1,5,7-triazabicyclo[4.4.0]dec-5-ene (TBD). The tertiary amine is preferably 2-methylimidazole.

In another preferred embodiment in combination with any of the above or below embodiments, the method for preparing the adhesive comprises reacting the polycondensate and the cross-linking agent in a solvent, and using said reaction mixture as a coating solution. In another preferred embodiment in combination with any of the above or below embodiments, said coating solution is laminated on a sheet or a film.

In another embodiment, the invention is directed to the use of the adhesive for laminating a sheet or a film.

In a preferred embodiment in combination with any of the above or below embodiments, the adhesive layer has a thickness of 5 µm to 100 µm, more preferably 15 µm to 40 µm.

In another preferred embodiment in combination with any of the above or below embodiments, the sheet or film is fossil-based or bio-based. It is possible to obtain a fully bio-based tape structure by laminating a bio-based adhesive composition onto a bio-based carrier film.

In another preferred embodiment in combination with any of the above or below embodiments, the sheet or film is fossil-based. The fossil-based plastic sheet or film is preferably made from poly(ethylene terephthalate) (PET), polyethylene (PE), polyvinyl chloride (PVC), and/or polypropylene (PP).

In another preferred embodiment in combination with any of the above or below embodiments, the sheet or film is bio-based. The bioplastic sheet or film is preferably made from cellulose, starch, and/or polylactic acid (PLA).

In another preferred embodiment in combination with any of the above or below embodiments, the sheet or film is made from poly(ethylene terephthalate), polyethylene, polypropylene, cellulose, starch and/or polylactic acid.

Cellulose-based films are commercially available, for example, from Innovia Films under the trade name NatureFlex. Polylactic acid-based films are commercially available, for example, from Nordenia Technologies. Preferably, a modified-PLA film with enhanced temperature resistance is used.

In a preferred embodiment in combination with any of the above or below embodiments, the polycondensate has a glass transition temperature (Tg) of less than or equal to -10°C.

In a preferred embodiment in combination with any of the above or below embodiments, the adhesive has a glass transition temperature (Tg) of less than or equal to 0°C.

As used herein, the glass transition temperature is determined using Differential Scanning Calorimetry. For the DSC analysis, the samples were first cooled to -100°C and then heated up to 50°C (heating ramp + 10°C/min) in a nitrogen atmosphere. DSC measurements were carried out on a Mettler DSC 30 equipped with a liquid nitrogen system. The DSC cell was purged with 50 ml/min of nitrogen. Data analysis has been carried out on the second heating ramp at a speed of 5°C/min.

In a preferred embodiment in combination with any of the above or below embodiments, the adhesive has a number of free carboxylic acid groups in the range of 1 to 50 mg KOH/g and a number of free hydroxyl groups in the range of 1 to 50 mg KOH/g. The acid value is defined as the number of mg of potassium hydroxide required to neutralize the free fatty acids in 1 g of sample, and was measured by direct titration with a standard potassium hydroxide solution. The hydroxyl value is defined as the number of mg of potassium hydroxide equivalent to the hydroxyl content of 1 g of sample, and is measured by acetylation followed by hydrolysation of excess acetic anhydride. The acetic acid formed is subsequently titrated with an ethanolic potassium hydroxide solution.

Depending on the selection and concentration of components a) and b), the adhesion strength can be adjusted to be in the range of 10 to 2,000 cN/200mm for use in various industrial applications, such as temporary surface protection or permanent bonding. For instance, the adhesion force used can be adjusted to be moderate, preferably below 100 cN/20mm, for temporal surface protection or the adhesion force can be adjusted to be high, preferably from 500 to 2,000 cN/20mm, for permanent bonding and joining applications.

In general, the adhesion strength is higher when the degree of cross-linking is lower and the adhesion strength is lower when the degree of cross-linking is higher.

The use of the heterobicycle allows the modification of the glass transition temperature (Tg) of the adhesive and, hence, the tuning of the visco-elastic properties of the adhesive. The heterobicycle is a polar compound strongly interacting with surfaces. Consequently, the heterobicycle-based adhesive displays good adhesion on a variety of surfaces, in particular on polar substrates. The heterobicycle-based adhesive allows for the formation of hydrogen bonds leading to good cohesion of the adhesive. Additionally, the heterobicycle-based adhesive shows a high biodegradability, in particular, if the heterbicycle is isosorbide.

The adhesive (or adhesion) strength can be measured by a 180°C peel test. This type of testing determines the force that is necessary to tear a strip of a tape from a standard surface at a constant speed. The result is the force referred to the width of the tape. Samples for the peel test were prepared as follows. At first, an adhesive composition is coated on a carrier film (for instance, PET) and cured as described in Examples 8 to 10. Then, 2 cm-wide, 10 cm-long pieces of adhesive tape are cut and placed on a table (the adhesive face on top). Half of the tape length is then covered with a second strip of plastic film (this film should be identical to the carrier film on which the adhesive composition has been previously coated). Then, this assembly is turned upside down and the free adhesive domain is applied manually on the reference surface (for instance, BA steel). A two kg cylinder is rolled twice on the tape in order to ensure good contact between the adhesive and the reference surface. A dwell time of 15 minutes is observed prior to performing the peeling test. The peel test is performed on a Zwick Z005 testing machine with a constant peeling speed of 300 mm/min.

The adhesive is used as a pressure sensitive adhesive (PSA).

In summary, the adhesive of the present invention shows good adhesive properties, superior transparency and biodegradability.

The following examples further describe the invention.

### EXAMPLES

### Example 1: Synthesis of a linear bio-based polyester containing isosorbide and a dimer of a fatty acid

A typical polymerisation was carried out according to the following procedure. PRIPOL 1009 (261.21 g, 451.3 mmol) and isosorbide (63.79 g, 436.49 mmol) were weighed into a 1 I reactor vessel. The reactor was fitted with an Allihn reflux condenser and a Dean-Stark type condenser to collect the water created by the polycondensation reaction. During the first part of the experiment, the set-up was continuously flushed with inert gas (nitrogen) to limit oxidation and facilitate transport of water vapour. While stirring, the mixture was heated from room temperature to 190°C using a heating mantle and a U-shaped mechanical stirrer.

After 4 hours, the catalyst titanium tetrabutoxide was introduced in the reaction mixture (0.01 wt%). Subsequently, vacuum processing was applied (with typical pressure ranging from 1 - 5 mbar), and the reaction temperature was increased to 250°C. After 5 hours, the polymer was discharged from the reactor and left to cool. The resulting polyester had a glass transition temperature (Tg) of -19.4°C, a weight average molecular weight (Mw) of 14,374 g/mol, a number average molecular weight (Mn) of 6,789 g/mol, a polydispersity of 2.12, an acid value of 23.6 mg KOH/g and a hydroxyl value of 38 mg KOH/g.

### Example 2: Synthesis of a linear bio-based polyester containing a dimer of a fatty acid, azelaic acid and isosorbide

PRIPOL 1009 (179.36 g, 309.9 mmol), azelaic acid (58.33 g, 309.9 mmol) and isosorbide (87.31 g, 597.46 mmol) were weighed into a 1 I reactor vessel. The reaction was carried out following the procedure reported in Example 1. The resulting polyester had a glass transition temperature (Tg) of -11.5°C, a weight average molecular weight (Mw) of 16,310 g/mol, a number average molecular weight (Mn) of 7,004 g/mol, a polydispersity of 2.33, and an acid value of 22.17 mg KOH/g.

### Example 3: Synthesis of a branched bio-based polyester containing a dimer of a fatty acid, a trimer of a fatty acid and isosorbide

PRIPOL 1009 (250.47 g, 432.7 mmol), PRIPOL 1040 (10.73 g, 14.00 mmol) and isosorbide (63.79 g, 436.50 mmol) were weighed into a 1 I reactor vessel. The reaction was carried out following the procedure reported in Example 1. The resulting polyester had a glass transition temperature (Tg) of -19.8°C, and a weight average molecular weight (Mw) of 22,900 g/mol.

### Example 4: Synthesis of a linear bio-based polyester containing a dimer of a fatty acid, a dimer of a fatty alcohol and isosorbide

PRIPOL 1009 (236.62 g, 408.8 mmol), PRIPOL 2033 (44.19 g, 77.01 mmol) and isosorbide (44.19 g, 302.37 mmol) were weighed into a 1 I reactor vessel. The reaction was carried out following the procedure reported in Example 1. The resulting polyester had a glass transition temperature (Tg) of -30.5°C, a weight average molecular weight (Mw) of 16,576 g/mol, a number average molecular weight (Mn) of 6,927 g/mol, and a polydispersity of 2.39.

### Comparative Example 5: Synthesis of a linear bio-based polyester containing a dimer of a fatty acid and a dimer of a fatty alcohol, without adding isosorbide

A biobased polyester was prepared by mixing PRIPOL 1009 (150.77 g, 260.46 mmol), PRIPOL 2033 (112.63 g, 196.28 mmol) and without isosorbide. The reaction was carried out following the procedure reported in Example 1. The resulting polyester had a glass transition temperature (Tg) of -50°C, and a weight average molecular weight (Mw) of 14,156 g/mol.

### Example 6: Synthesis of a branched bio-based polyester containing a dimer acid, glycerol and isosorbide

PRIPOL 1009 (219.17 g, 465.00 mmol), glycerol (7.18 g, 77.94 mmol) and isosorbide (48.65 g, 332.89 mmol) were weighed into a 1 I reactor vessel. The reaction was carried out following the procedure reported in Example 1. The resulting polyester had a glass transition temperature (Tg) of -17.2°C, and a weight average molecular weight (Mw) of 21,234 g/mol.

### Example 7: Synthesis of a bio-based poly(ester amide) containing isosorbide, a dimer of a fatty amine, and a dimer of a fatty acid.

PRIPOL 1009 (236.62 g, 408.8 mmol), PRIPOL 1074 (44.19 g, 77.01 mmol) and isosorbide (44.19 g, 302.37 mmol) were weighed into a 1 I reactor vessel. The reaction was carried out following the procedure reported in Example 1. The resulting poly(ester amide) had a glass transition temperature (Tg) of -22.9°C, and a weight average molecular weight (Mw) of 18,000 g/mol.

### Example 8: Pressure sensitive adhesive composition cross-linked with an epoxidized triglyceride

11.51 g of Polymer 3 (synthesized in Example 3) were mixed with 863 mg of epoxidized linseed oil (commercial name DEHYSOL B316 SPEZIAL from Cognis) and 116 mg of NACURE XC-9206 (curing catalyst obtained from King Industries), and 22.29 g of xylene. The amount of epoxidised oil was 7.5 wt% relative to the polymer weight. Once the solution had been homogenised, a 40 µm adhesive layer was roll-coated manually at room temperature with an approximative speed of 50 cm/s on a 50 µm thick polyethylene terephtalate (PET) film, and this bilayer stack was dried and cured in an oven at 155°C for 15 minutes.

This resulted in a very tacky film suitable for pressure sensitive adhesive (PSA) applications. The adhesive strength, as measured by a 180° peel test to panels after double rolling of a two kg cylinder on the tape and a subsequent dwell time of 15 minutes, was 656 cN/20mm from BA Steel, 107 cN/20mm from polypropylene (PP), and 1036 cN/20mm from polycarbonate (PC).

### Experiment 9: Effect of the weight fraction of cross-linker on the adhesive strength

Example 8 was repeated by varying the polymer/cross-linker weight ratio. Adhesives prepared with 10 wt% of DEHYSOL B316 SPEZIAL displayed adhesive strengths of 385 cN/20mm from BA Steel, 45 cN/20mm from polypropylene (PP), and 836 cN/20mm from polycarbonate (PC). Adhesives prepared with 15 wt% of DEHYSOL B316 SPEZIAL displayed adhesive strengths of 142 cN/20mm from BA Steel, 28 cN/20mm from polypropylene (PP), and 691 cN/20mm from polycarbonate (PC).

### Example 10: Pressure sensitive adhesive composition cross-linked with an isocyanate compound

10.31 g of Polymer 2 (synthesized in Example 2) were mixed with 2.063 g of a trimerized HDI (DESMODUR N3600) and 4.42 g of toluene. Once the solution had been homogenised, a 80 µm adhesive layer (wet thickness) was roll-coated manually at room temperature with an approximative speed of 50 cm/s on a 70 µm thick polyethylene terephtalate (PET) film, and this bilayer stack was dried and cured in an oven at 130°C for 5 minutes.

This resulted in a tacky film suitable for pressure sensitive adhesive (PSA) applications. The dry thickness of the adhesive layer was 40 µm. The adhesive strength, as measured by a 180° peel test to panels after double rolling of a two kg cylinder on the tape and a subsequent dwell time of 15 minutes, was 390 cN/20mm from BA Steel.

## Claims

1. A pressure-sensitive adhesive obtainable by reacting
a) a polycondensate of
a1) a heterobicycle containing from 4 to 8 carbon atoms and from 1 to 3 oxygen atoms, wherein the heterobicycle is substituted by 2 to 4 hydroxyl groups,
a2) a dimer of a fatty acid,
and
b) a cross-linking agent having at least 2 functional groups per molecule.

2. The pressure-sensitive adhesive of claim 1, wherein
a1) further contains a diol monomer, a dimer of a fatty alcohol, glycerol, a diamine monomer, and/or a dimer of a fatty amine.

3. The pressure-sensitive adhesive of claim 1 or 2, wherein
a2) further contains a diacid monomer and/or a trimer of a fatty acid.

4. The pressure-sensitive adhesive of any of claims 1 to 3, wherein the heterobicycle is a dianhydrohexitol, preferably selected from the group consisting of isosorbide, isomannide and isoidide.

5. The pressure-sensitive adhesive of any of claims 2 to 4, wherein the fatty alcohol has from 14 to 22 carbon atoms.

6. The pressure-sensitive adhesive of any of claims 2 to 5, wherein the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid, and/or erucic acid.

7. The pressure-sensitive adhesive of any of claims 1 to 6, wherein the fatty acid has from 18 to 22 carbon atoms.

8. The pressure-sensitive adhesive of any of claims 1 to 7, wherein the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

9. The pressure-sensitive adhesive of any of claims 3 to 8, wherein the diacid monomer is a saturated hydrocarbon dicarboxylic acid containing 3 to 16 carbon atoms.

10. The pressure-sensitive adhesive of any of claims 1 to 9, wherein the cross-linking agent is selected from the group consisting of an isocyanate, epoxide, and anhydride.

11. The pressure-sensitive adhesive of any of claims 1 to 10, wherein the polycondensate has a glass transition temperature (Tg) of less than or equal to -10°C,

12. The pressure-sensitive adhesive of any of claims 1 to 11, having a glass transition temperature (Tg) of less than or equal to 0°C.

13. A method for preparing the pressure-sensitive adhesive of any of claims 1 to 12, comprising reacting in a solvent
a) a polycondensate of
a1) a heterobicycle containing from 4 to 8 carbon atoms and from 1 to 3 oxygen atoms, wherein the heterobicycle is substituted by 2 to 4 hydroxyl groups,
a2) a dimer of a fatty acid,
and
b) a cross-linking agent having at least 2 functional groups per molecule.

14. Use of the pressure-sensitive adhesive according to any of claims 1 to 12 for laminating a sheet or a film.

## Patentansprüche

1. Haftklebstoff, erhältlich durch Umsetzen
a) eines Polykondensats aus
a1) einem Heterobizyklus mit 4 bis 8 Kohlenstoffatomen und 1 bis 3 Sauerstoffatomen, wobei der Heterobizyklus mit 2 bis 4 Hydroxylgruppen substituiert ist,
a2) einem Dimer einer Fettsäure,
und
b) eines Vernetzungsmittels mit mindestens 2 funktionellen Gruppen pro Molekül.

2. Haftklebstoff nach Anspruch 1, wobei
a1) weiterhin ein Diolmonomer, ein Dimer eines Fettalkohols, Glycerol, ein Diaminmonomer und/oder ein Dimer eines Fettsäureamins enthält.

3. Haftklebstoff nach Anspruch 1 oder 2, wobei
a2) weiterhin ein Disäuremonomer und/oder ein Trimer einer Fettsäure enthält.

4. Haftklebstoff nach einem der Ansprüche 1 bis 3, wobei der Heterobizyklus ein Dianhydrohexitol ist, bevorzugt ausgewählt aus der Gruppe, bestehend aus Isosorbid, Isomannid und Isoidid.

5. Haftklebstoff nach einem der Ansprüche 2 bis 4, wobei der Fettalkohol 14 bis 22 Kohlenstoffatome hat.

6. Haftklebstoff nach einem der Ansprüche 2 bis 5, wobei das Dimer eines Fettalkohols durch Hydrieren eines Dimers von Ölsäure, Linolsäure, Palmitoleinsäure, Linolensäure, Elaeostearinsäure, Ricinusölsäure, Vernolsäure, Licansäure, Myristoleinsäure, Margaroleinsäure, Gadoleinsäure, Eicosadiensäure und/oder Erucasäure erhältlich ist.

7. Haftklebstoff nach einem der Ansprüche 1 bis 6, wobei die Fettsäure 18 bis 22 Kohlenstoffatome hat.

8. Haftklebstoff nach einem der Ansprüche 1 bis 7, wobei die Fettsäure ausgewählt ist aus der Gruppe, bestehend aus Ölsäure, Linolsäure, Palmitoleinsäure, Linolensäure, Elaeostearinsäure, Ricinusölsäure, Vernolsäure, Licansäure, Myristoleinsäure, Margaroleinsäure, Gadoleinsäure, Eicosadiensäure und/oder Erucasäure.

9. Haftklebstoff nach einem der Ansprüche 3 bis 8, wobei das Disäuremonomer eine gesättigte Kohlenwasserstoffdicarbonsäure mit 3 bis 16 Kohlenstoffatomen ist.

10. Haftklebstoff nach einem der Ansprüche 1 bis 9, wobei das Vernetzungsmittel ausgewählt ist aus der Gruppe, bestehend aus einem Isocyanat, einem Epoxid und einem Anhydrid.

11. Haftklebstoff nach einem der Ansprüche 1 bis 10, wobei das Polykondensat eine Glasübergangstemperatur (Tg) von -10°C oder weniger hat.

12. Haftklebstoff nach einem der Ansprüche 1 bis 11 mit einer Glasübergangstemperatur (Tg) von 0°C oder weniger.

13. Verfahren zum Herstellen des Haftklebstoffes nach einem der Ansprüche 1 bis 12, umfassend das Umsetzen, in einem Lösungsmittel,
a) eines Polykondensats aus
a1) einem Heterobizyklus mit 4 bis 8 Kohlenstoffatomen und 1 bis 3 Sauerstoffatomen, wobei der Heterobizyklus mit 2 bis 4 Hydroxylgruppen substituiert ist,
a2) einem Dimer einer Fettsäure,
und
b) eines Vernetzungsmittels mit mindestens 2 funktionellen Gruppen pro Molekül.

14. Verwendung des Haftklebstoffes nach einem der Ansprüche 1 bis 12 zum Laminieren einer Folie oder eines Films.

## Revendications

1. Un adhésif sensible à la pression pouvant être obtenu par réaction de
a) un polycondensat de
a1) un hétérobicycle contenant de 4 à 8 atomes de carbone et de 1 à 3 atomes d'oxygène, dans lequel l'hétérobicycle est substitute par 2 à 4 groupes hydroxyle,
a2) un dimère d'acide gras,
et
b) un agent de réticulation ayant au moins 2 groupes fonctionnels par molécule.

2. L'adhésif sensible à la pression selon la revendication 1, dans lequel
a1) contient en outre un monomère de diol, un dimère d'alcool gras, un glycérol, un monomère de diamine et/ou un dimère d'amine gras.

3. L'adhésif sensible à la pression selon la revendication 1 ou 2, dans lequel
a2) contient en outre un monomère de diacide et/ou un trimère d'acide gras.

4. L'adhésif sensible à la pression selon l'une quelconque des revendications 1 à 3, dans lequel l'hétérobicycle est un dianhydrohexitol, de préférence choisi parmi le groupe consistant en un isosorbide, un isomannide et un isoidide.

5. L'adhésif sensible à la pression selon l'une quelconque des revendications 2 à 4, dans lequel l'alcool gras a de 14 à 22 atomes de carbone.

6. L'adhésif sensible à la pression selon l'une quelconque des revendications 2 à 5, dans lequel le dimère de l'alcool gras peut etre obtenu par hydrogénation d'un dimère d'acide oléique, d'acide linoléique, d'acide palmitoléique, d'acide linolénique, d'acide éléostéarique, d'acide ricinoléique, d'acide vernolique, d'acide licanique, d'acide myristoléique, d'acide margaroléique, d'acide gadoléique, d'acide éicosadiénoique et/ou d'acide érucique.

7. L'adhésif sensible à la pression selon l'une quelconque des revendications 1 à 6, dans lequel l'acide gras a de 18 à 22 atomes de carbone.

8. L'adhésif sensible à la pression selon l'une quelconque des revendications 1 à 7, dans lequel l'acide gras est sélectionné parmi le groupe consistant en un acide oléique, un acide linoléique, un acide palmitoléique, un acide linolénique, un acide éléostéarique, un acide ricinoléique, un acide vernolique, un acide licanique, un acide myristoléique, un acide margaroléique, un acide gadoléique, un acide éicosadiénoique et/ou un acide érucique.

9. L'adhésif sensible à la pression selon l'une quelconque des revendications 3 à 8, dans lequel le monomère de diacide est un acide dicarboxylique hydrocarboné saturé contenant 3 à 16 atomes de carbone.

10. L'adhésif sensible à la pression selon l'une quelconque des revendications 1 à 9, dans lequel l'agent de réticulation est sélectionné parmi le groupe consistant en un isocyanate, un époxyde et un anhydride.

11. L'adhésif sensible à la pression selon l'une quelconque des revendications 1 à 10, dans lequel le polycondensat a une température de transition vitreuse (Tg) de moins de ou égale à -10°C.

12. L'adhésif sensible à la pression selon l'une quelconque des revendications 1 à 11, ayant une température de transition vitreuse (Tg) de moins de ou égale à 0°C.

13. Une méthode pour la préparation de l'adhésif sensible à la pression selon l'une quelconque des revendications 1 à 12, comprenant la réaction dans un solvant de
a) un polycondensat de
a1) un hétérobicycle contenant de 4 à 8 atomes de carbone et de 1 à 3 atomes d'oxygène, dans lequel l'hétérobicycle est substitué par 2 à 4 groupes hydroxyle,
a2) un dimère d'un acide gras,
et
b) un agent de réticulation ayant au moins 2 groupes fonctionnels par molécule.

14. Utilisation de l'adhésif sensible à la pression selon l'une quelconque des revendications 1 à 12 pour stratifier une feuille ou un film.
